# EUROPEAN PATENT APPLICATION

(11) **EP 1 767 116 A1**
(43) Date of publication of application: **28.03.2007**
(21) Application number: 06120601.7
(22) Date of filing: 13.09.2006
(51) Int. Cl.: A44C 27/00, B21L 11/00, A44C 11/00

(54) **Method for manufacturing articles of jewellery, in particular chains for ornamental purposes, and articles which can be obtained by means of said method**

(30) Priority: 21.09.2005 IT PD20050267
(71) Applicant: Silmar S.p.A., 36060 Romano D'Ezzelino (Vicenza) (IT)
(72) Inventor: Cerato, Silverio, I-36065 Mussolente (VI) (IT)
(74) Representative: Gallo, Luca

(57) **Abstract**

Article of jewellery such as a chain for bracelets, necklaces or the like, in particular of the double-face type, comprising an inner core (2) made of flexible material, preferably precious metal, and a continuous winding obtained with a multi-layer strip (3) wrapped around so as to cover the outer surface of the core (2). The outer layer (3a) may undergo diamond-machining operations so as to leave visible an underlying layer (3b, 3c) with the desired form and dimensions.

## Description

### Field of application

The present invention relates to a method for manufacturing articles of jewellery, in particular chains for ornamental purposes, and articles which can be obtained by means of this method.

The method and the articles according to the present invention may be advantageously used in the manufacturing industry for the production of semi-finished articles made of precious metal alloys.

### Background art

For some time now in the sector relating to the production of articles of jewellery an advanced technology for the production of ornamental chains used to make necklaces, bracelets and other products has been developed.

In particular, chains have been introduced onto the market, in which a flexible core, generally consisting of a fabric formed by strands of gold or other precious material, is surrounded by ringlets, also made of a precious material, which are arranged in sequence and alongside each other.

The ringlets preferably have a flattened oval shape so as to define a visible face and a face in contact with the skin and are obtained by cutting a tube or a rod into portions of constant width.

More recently, it has been envisaged subjecting the two sides of the chain to different treatments able to impart to their surfaces a different colour or a different aesthetic appearance. In this way a double-face product, i.e. one which may be used in both directions, is provided.

The main drawback of this solution lies in the fact that, following deterioration of the article as a result of scoring, scuffing or other phenomena, the lining is partially removed and results in the loss of the double-face effect or at least its perfect aesthetic quality.

In order to overcome this drawback, the patent application ITVR2000A000083 envisages no longer performing surfaces treatments in order to distinguish the faces of the article but instead combining together parts which are made of precious metal with a different colouring or different composition and from which it is possible to obtain, after suitable machining or bending processes, firstly tubular parts and then, by means of cutting operations, ringlets with two or more colours which, once mounted on a flexible core, result in the formation of chains (necklaces, bracelets, etc) which have a double face or a different colouring on the two faces.

For this purpose, as indicated in Figure A, two strips of precious metal 3 and 4 are firstly welded together by means of a longitudinal (torch) weld so as to obtain a single band 10 which is first shaped in the form of a tube and then cut into dual-colour cylindrical ringlets to be mounted on a flexible core so as to obtain the double-face chains.

Similarly, as shown in Figure B, the utility model No. IT 00242902 teaches connecting together two differently coloured plates 1A and 1B so as to obtain a tubular part in the form of a single body 1C, intended to be split up into individual ringlets 10 to be mounted around a flexible core 20. At this point, the semi-finished article may be shaped in the desired form, for example a typically elliptical form, as shown in Figure B in order to obtain the finished chain 1.

These latter two processes for the production of double-face chains, although improving the quality of the finished products compared to those initially mentioned which envisaged only a different surface treatment of the two faces of the chain, are too complex to perform, in particular owing to the need to divide up the tubular part obtained from joining together bands of different metal and the need to mount the individual ringlets thus obtained onto a flexible core.

### Disclosure of the invention

In this situation the main object of the present invention is to provide an alternative method for manufacturing articles of jewellery and in particular chains for ornamental purposes, having two faces with a different aesthetic appearance.

A further object of the present invention is to provide a method for manufacturing articles of jewellery which is simple and low cost.

Another object of the present invention is to provide a method suitable for manufacturing articles of jewellery having two faces able to retain their aesthetic appearance over time.

Another object of the present invention is to provide articles of jewellery which have two faces with a different and substantially unchangeable aesthetic appearance over time.

Another object of the present invention is to provide articles of jewellery and in particular chains for ornamental purposes which have two faces on which it is possible to perform numerous and different machining operations so as to vary in a versatile manner the overall aesthetic appearance of the article.

Advantageously, the articles obtained with the method according to the invention are distinguished by a very high quality which is constant over time and by low production costs. Moreover, the method according to the invention allows a considerable degree of machining versatility so as to obtain the most varied aesthetic effects on the two faces of the articles.

### Brief description of the drawings

The technical features of the invention, in accordance with the abovementioned objects, may be clearly determined from the contents of the claims indicated below and the advantages thereof will emerge more clearly from the detailed description which follows, provided with reference to the accompanying drawings, which show a purely exemplary and non-limiting example of embodiment in which:
- Figure 1 shows a multi-layer strip for manufacturing the article according to the invention;
- Figures 2A and 2B show two details of the multi-layer strip in the case of two and three layers, respectively;
- Figure 3 shows a portion of an article of jewellery, according to the invention, consisting of a chain in accordance with a first example of embodiment;
- Figures 4 shows a portion of an article of jewellery, according to the invention, consisting of a chain in accordance with a second example of embodiment;

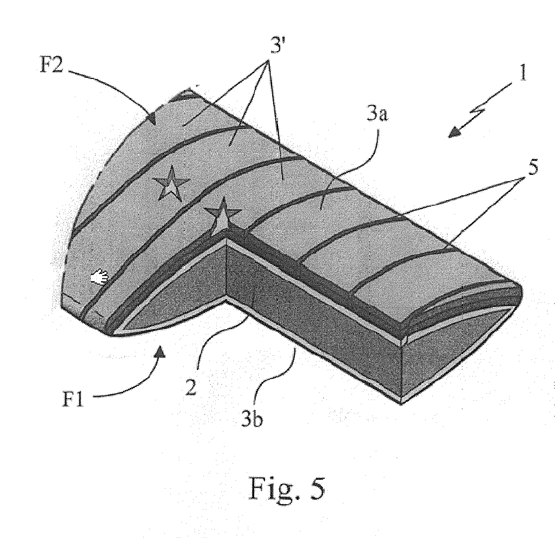

- Figure 5 shows a portion of an article of jewellery, according to the invention, consisting of a chain in accordance with a third example of embodiment.

### Detailed description

With reference to the accompanying drawings, 1 denotes in its entirety the article of jewellery according to the present invention.

Below a description will be provided with reference to an article of jewellery of the type consisting of a chain for making necklaces, bracelets or similar articles, it being understood, however, that the same article may also have other constructional forms without thereby departing from the scope of protection of the present patent.

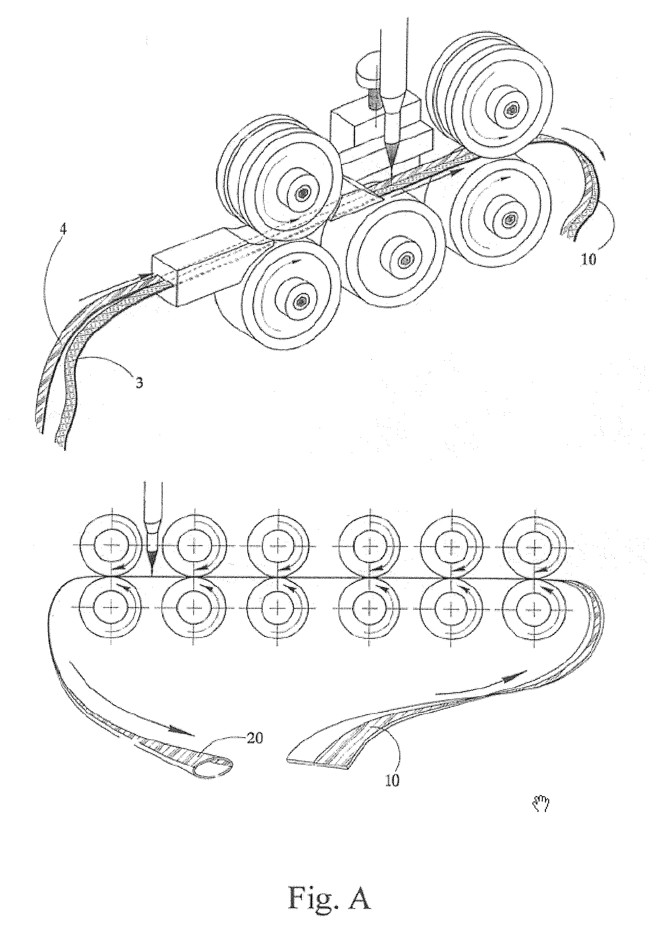

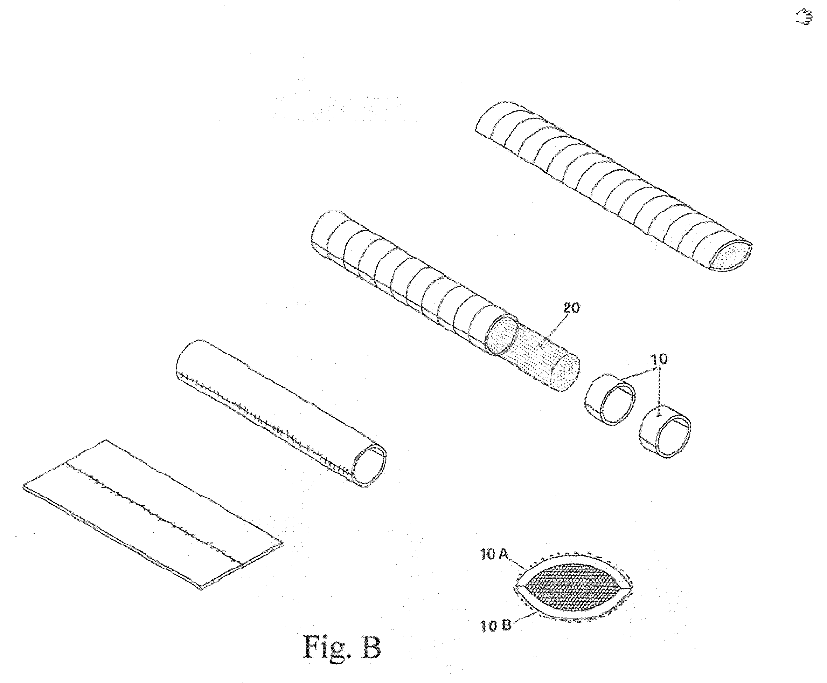

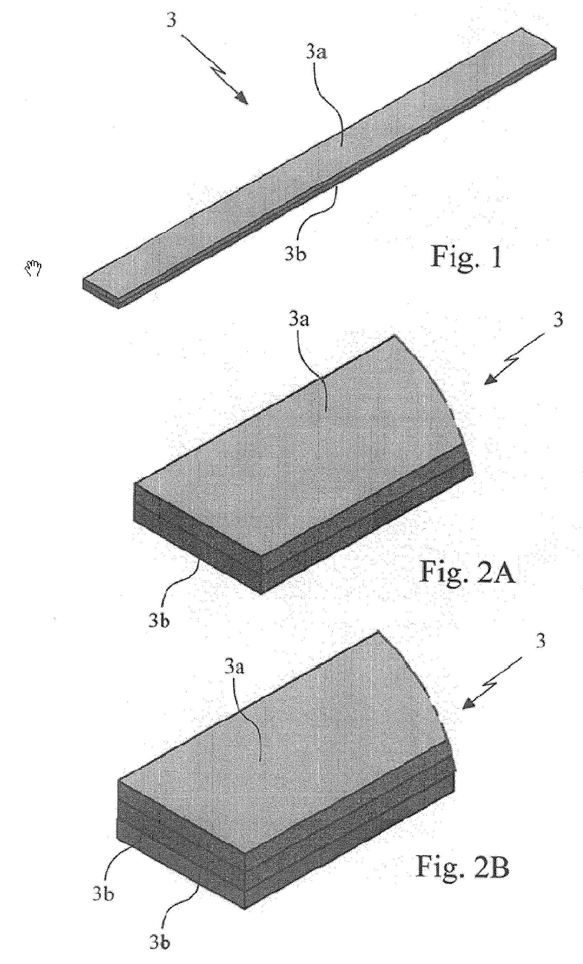

In accordance with the drawing according to Figure 1, the chain 1 has an inner core 2 on which a substantially continuous winding 3 is arranged.

The core 2 is composed, as usually occurs in this type of chain (a known type of which is commonly referred to in the sector in question by the term "omega chain"), of a cord of fabric formed by strands of gold or other precious material so as to obtain an inner chain support which is both valuable, so as not to detract from the article, and mechanically strong and flexible so that the chain may be deformed and worn easily.

Obviously, however, the core 2 may also be made of materials which are not valuable, without thereby departing from the scope of protection of the present invention.

The winding 3 consists of a multi-layer strip wound so as to cover the outer surface of the core. Winding of the strip 3 around the core 2 is performed by wrapping the said strip in turns 3' arranged alongside each other.

Winding of the strip around the core 2 is performed with a spiral-like progression. The line 5 separating one turn and the next one imparts to the article the required flexibility. Since the winding is continuous, the turns are continuously connected to each other via the separating line without interruption.

In greater detail, the multi-layer strip 3, the methods of manufacture of which will be examined in the description below, is composed of several superimposed layers, which are rigidly fixed to each other so as to form a single-body winding.

The number of layers may vary depending on the requirements and in particular the aesthetic effects which are to be produced on the article.

For example, the drawings 3 and 5 show two articles provided with a multi-layer strip composed, respectively, of 2 and 3 different layers (see also Figures 2A and 2B) indicated by the reference numbers 3a,3b and 3c in the direction from the outer layer towards the inner layer.

In accordance with the idea forming the basis of the present invention, at least one portion of the outer layer 3a is removed in order to leave visible an underlying layer 3b or 3c.

Obviously, removal may affect a greater or smaller area and may affect more than one layer or may affect different layers in different areas depending on the effect which is to be achieved.

In the example according to Figure 1 in which the article has an outer layer 3a, a middle layer 3b and an inner core 2, it has been envisaged removing internally by means of a diamond-machining step, the outermost layer 3a from the entire face of the article indicated by F1 so as to leave visible the middle layer 3b, while leaving the other face F2 unchanged with the outer layer 3a intact.

In this way, it is possible to obtain a double-face article, namely an article with two faces having a different appearance for varied use.

It is important to note that the different aesthetic appearance of the two faces F1 and F2 of the article 1 is imparted by the diversity of the material used for the two layers. Therefore, any wear of the surface of the layers does not result in a substantial worsening in the aesthetic characteristics of the article which in fact keeps its colour unchanged. Obviously on each face of the article it will be possible to perform, however, surface colouring operations (rhodium plating) or the like.

Diamond-machining consists in the cold cutting and mechanical removal of surface layers of articles using tools with diamond tips. By means of this machining process, which is practically indispensable in the precious metals industry, it is possible to obtain particularly glossy surfaces able to achieve light effects which increase the attractiveness of the semi-finished article.

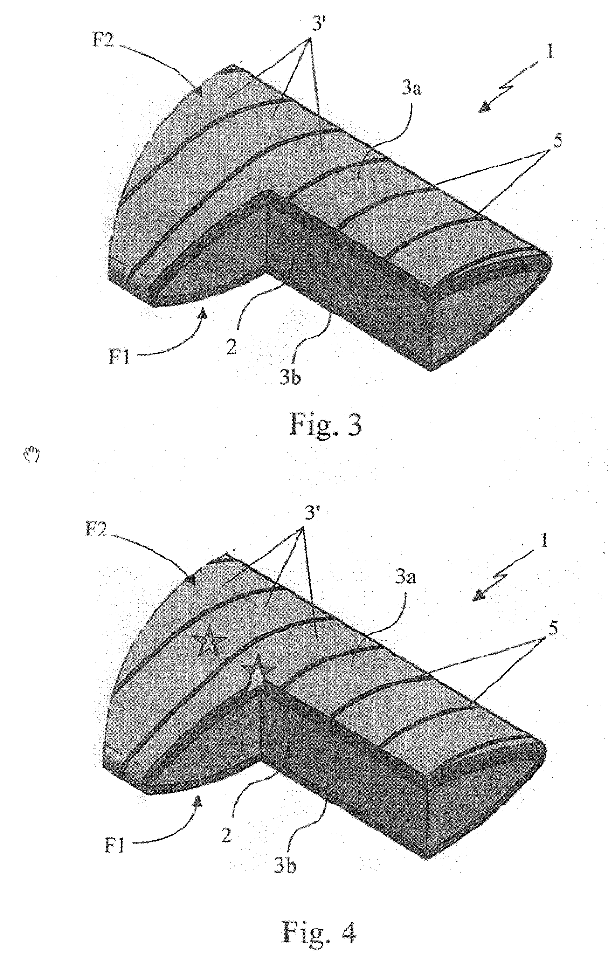

In the example of Figure 4 it has been envisaged machining star shapes on the outer layer 3a in order to leave visible also on the face F1 portions of the underlying middle layer 3b.

The different layers 3a, 3b, 3c advantageously consist of different materials or materials with different aesthetic characteristics such as, for example, a different colour.

Each layer is made of precious metal chosen in particular from gold, platinum and silver or is made of a precious metal alloy.

A welding layer, or more specifically a braze-welding layer, is provided between one layer and the next so as to bond rigidly together the said individual layers.

This welding or braze-welding layer may be distributed on the joining surface of at least one strip in the desired quantity and form depending, for example, on the number of layers used and the material which forms it. Therefore, the welding or braze-welding layer may line the entire joining surface continuously or areas which extend continuously only in the longitudinal direction of the strip and discontinuously in the transverse direction.

The present invention also relates to a method for manufacturing articles of jewellery of the type mentioned above.

Below, for the sake of simplicity of the description, reference will be made to the articles already described, although it must be understood that the method in question is suitable also for manufacturing articles different from those shown.

In accordance with the present invention, the method comprises initially suitable steps for preparing two or more strips of precious metal (gold, silver, platinum, etc.) or a precious metal alloy which can be obtained by means of drawing and cutting processes which are known per se.

The layers are therefore firstly combined on top of one another by arranging between them a welding or braze-welding layer. The assembly thus obtained then undergoes a drawing step aimed at pressing each layer onto the other one prior to an oven-baking step which causes fixing together thereof as a result of melting of the braze-welding layer. In this way it is possible to obtain a multi-layer strip 3 composed of two or more layers which are rigidly fixed together.

The fixing step described above may alternatively be performed by compressing with considerable pressure one layer onto the other layer until a partial intermingling of the materials of the layer is achieved such as to cause joining together thereof. In this case the welding layer must be understood as being the thickness of the materials responsible for this intermingling.

The multi-layer strip thus produced is then wound in a preferably automatic manner, by means of a special machine tool, wrapping it in adjacent turns continuously around the core 2 so as to cover its outer surface. This thus results in an elongated article, such as a chain for example, composed of at least one outer layer 3a consisting of said first strip, at least one middle layer 3b consisting of said second strip rigidly fixed to the first strip, and at least one inner layer consisting of the core 2.

At this point, a second drawing step is preferably performed, this being intended to provide the article thus formed with the desired shape, for example a flattened shape with a substantially elliptical cross-section as shown in the accompanying figures.

This is then followed by a step for removal of material by means of diamond-machining from at least one portion of a face of the chain so as to leave visible at least one underlying layer. This removal may affect in particular at least one entire face so as to obtain a double face chain with two different colours.

With the abovementioned method it is possible to manufacture advantageously in a simple, low cost and functional manner articles of jewellery and in particular chains for necklaces and bracelets, which may undergo simple diamond-machining operations in order to obtain permanent and very different aesthetic effects.

The invention thus conceived, therefore, achieves the predefined objects.

Obviously it may also assume, in its practical embodiment, forms and configurations which are different from that illustrated above without thereby departing from the present scope of the invention.

Moreover, all the details may be replaced by technically equivalent parts and the dimensions, the forms and the materials used may be of any nature according to requirements.

## Claims

1. Method for manufacturing an article of jewellery comprising the following operating steps:
- at least one first step for preparing a first strip of precious metal or precious metal alloy;
- at least one second step for preparing a second strip of precious metal or precious metal alloy;
- a step for joining and fixing said first strip on top of said second strip with the arrangement of a welding or braze-welding layer in between;
- a step for fixing said superimposed strips by means of melting of said welding or braze-welding layer;
- a step for winding said multi-layer strip onto an elongated core so as to cover its outer surface in order to obtain an elongated article composed of at least one outer layer consisting of said first strip, at least one middle layer consisting of said second strip rigidly fixed to said first layer and at least one inner layer consisting of said core;
- a step for removing material from at least one portion of a face of said elongated article so as to leave visible at least one underlying layer.

2. Method according to Claim 1, in which said winding step is performed by wrapping adjacent turns of the strip with a continuous extension around the core.

3. Method according to Claim 1, in which a plurality of steps for preparing strips of precious material or precious metal alloy is envisaged and in which said joining and fixing steps are performed on the plurality of strips superimposed on each other so as to obtain said multi-layer strip.

4. Method according to one of the preceding claims, in which at least one step for drawing said multi-layer strip is envisaged, said step to be performed before and/or after said step for fixing said individual strips.

5. Method according to one of the preceding claims, in which a step for drawing said elongated article is envisaged, so as to form it with the desired shape and dimensions.

6. Method according to Claim 1, in which said welding or braze-welding layer continuously lines the joining surface of at least one strip.

7. Method according to Claim 1, in which said welding or braze-welding layer extends continuously on said joining surface in the longitudinal direction of said strip and discontinuously in its transverse direction.

8. Method according to any one of the preceding claims, in which at least one said strip is made of precious metal chosen in particular from among gold, platinum and silver or is made of a precious metal alloy chosen in particular from among a gold alloy, a silver alloy and a platinum alloy.

9. Method according to any one of the preceding claims, in which said removal step is obtained by means of diamond-machining.

10. Article of jewellery of the type with an elongated form such as a chain for bracelets, necklaces or the like, comprising:
- at least one inner core;
- at least one substantially continuous winding obtained with a multi-layer strip wrapped so as to cover the outer surface of the core, said multi-layer strip being composed of at least one outer layer and at least one middle layer rigidly fixed to said outer layer by means of a welding or braze-welding layer and situated between the latter and said core; said outer layer having at least one missing portion so as to leave an underlying layer visible.

11. Article of jewellery according to Claim 10, in which said article is provided with at least two faces, i.e. a visible face and a resting face, and in which said missing portion is situated on one of the two faces so as to form an article with two faces having a different aspect.

12. Article of jewellery according to Claim 10, in which said core is made of flexible material in particular consisting of strands of precious metal.

13. Article of jewellery according to Claim 10, in which at least one layer is made of precious metal chosen in particular from gold, platinum and silver or is made of a precious metal alloy.

14. Article of jewellery according to Claim 10, in which said multi-layer strip is composed of a plurality of superimposed layers joined together.

15. Article of jewellery according to any one of Claims 10-14, in which material is removed from areas of at least one face of said layers so as to leave underlying layers visible.
